## Europäisches Patentamt
## European Patent Office
## Office européen des brevets

(11) Veröffentlichungsnummer: **0 013 912**
**B1**

(12) **EUROPÄISCHE PATENTSCHRIFT**

(45) Veröffentlichungstag der Patentschrift:
**12.09.84**

(51) Int. Cl.³: **B 01 J 47/10**, B 01 J 49/00

(21) Anmeldenummer: **80100123.1**

(22) Anmeldetag: **11.01.80**

(54) **Verfahren zum Ionenaustausch in Flüssigkeiten.**

(30) Priorität: **20.01.79 DE 2902218**

(43) Veröffentlichungstag der Anmeldung:
**06.08.80 Patentblatt 80/16**

(45) Bekanntmachung des Hinweises auf die Patenterteilung:
**12.09.84 Patentblatt 84/37**

(84) Benannte Vertragsstaaten:
**AT BE CH DE FR GB IT LU NL SE**

(56) Entgegenhaltungen:
**DE - A - 1 442 925**
**DE - A - 1 941 391**
**DE - A - 2 314 835**
**US - A - 3 394 079**
**US - A - 3 595 784**

**Die Akte enthält technische Angaben, die nach dem Eingang der Anmeldung eingereicht wurden und die nicht in dieser Patentschrift enthalten sind.**

(73) Patentinhaber: **Ladendorf, Peter, Dr.-Ing., c/o Aqua Engineering Gesellschaft mbH Moserstrasse 29, A-5020 Salzburg (AT)**
Patentinhaber: **Arion, Nicolae M., Dipl.-Ing., c/o Thedor Christ AG Hauptstrasse 192, CH-4147 Aesch (CH)**

(72) Erfinder: **Ladendorf, Peter, Dr.-Ing., c/o Aqua Engineering Gesellschaft mbH Moserstrasse 29, A-5020 Salzburg (AT)**
Erfinder: **Arion, Nicolae M., Dipl.-Ing., c/o Thedor Christ AG Hauptstrasse 192, CH-4147 Aesch (CH)**

(74) Vertreter: **Glawe, Delfs, Moll & Partner Patentanwälte, Postfach 26 01 62 Liebherrstrasse 20, D-8000 München 26 (DE)**

## Beschreibung

Die Erfindung betrifft Verfahren zum diskontinuierlichen Ionenaustausch in Flüssigkeiten an einem Harzfestbett, wobei das Harz im Kurztakt in einer Beladungskolonne im Abstrom oder Aufstrom beladen, nach Beladung am Boden der Beladungskolonne abgenommen und in eine Regenerierkolonne zur externen Regenerierung im Abstrom eingeführt und in üblicher Weise gewaschen wird, wonach das regenerierte, gewaschene und gegebenenfalls rückgespülte Harz am Boden der Regenerierkolonne abgenommen und in die Beladungskolonne zurücktransportiert wird.

Eine Übersicht über gebräuchliche Ionenaustauschverfahren ist in Ullmann, «Enzyklopädie der technischen Chemie», Band 13, Verlag Chemie, Seiten 297 bis 346 (1977) enthalten. Die darin aufgeführten Begriffsbestimmungen werden auch in der folgenden Beschreibung verwendet.

Kurztaktverfahren zum Ionenaustausch mit interner Gegenstromregenerierung sind bekannt, z.B. aus «Jahrbuch der Wasserchemie», 39. Band, 1972, Seite 349 ff.

Aus der DE-A-1 442 925 ist ein diskontinuierliches Ionenaustauschverfahren der eingangs genannten Art bekannt, bei der ein Mischbett zur Anwendung kommt. Der Harztransport erfolgt in fluidisiertem Zustand.

Aus der DE-A-2 314 835 ist ein diskontinuierliches Ionenaustauschverfahren unter Verwendung eines Mischbettes bekannt, bei dem der Harztransport ebenfalls mit einem Luft-/Wassergemisch erfolgt und somit eine gründliche Durchmischung des Harzbettes angestrebt wird. Schliesslich betrifft die US-A-3 394 079 ein diskontinuierliches Ionenaustauschverfahren unter Verwendung eines Schichtbettes, bei dem ebenfalls der Harztransport im fluidisierten Zustand erfolgt.

Die Investitions- und Betriebskosten für Ionenaustauschanlagen hängen zwar nicht ausschliesslich, aber doch wesentlich von der Dauer und dem Wirkungsgrad der Regeneration ab. Da die kinetischen und hydraulischen Gegebenheiten bei der Beladung gänzlich andere als bei der Regeneration sind, bieten die bekannten Ionenaustauschkolonnen, die zur Gewährleistung optimaler Bedingungen bei der Beladung dimensioniert sind, für die Massnahmen der Regeneration und Wäsche schlechte hydraulische und kinetische Bedingungen.

Die bekannten Verfahren zum Ionenaustausch am Festbett weisen die folgenden Nachteile auf:

1. Die Ausbildung der Geometrie des Harzbettes in den Ionenaustauschkolonnen sind so bemessen, dass für die Beladung optimale hydraulische Bedingungen gewährleistet sind, z.B. eine spezifische Belastung in der Grössenordnung von 20–50 $m^3/h \cdot m^3_H$ und eine Höhe der Harzschicht von 1000 bis 2000 mm. Dies bedeutet erfahrungsgemäss, dass das Volumen des Regeneriermittels ca. 100% des Harzvolumens (Schüttvolumen) betragen muss. Dies wiederum zwingt zu einer Verdünnung des Regeneriermittels auf eine schwache Konzentration (1 bis 3 M), z.B. 3–10% HCl, 2–5% NaOH, 6–15% $HNO_3$, 10% NaCl.

2. Vorgenannte Regeneriermittelkonzentrationen erfordern Kontaktzeiten von 20–40 Minuten. Die spezifischen Belastungen sind bei der Regeneration mit 2–5 $m^3/h \cdot m^3_H$ somit bescheiden. Als Folge hieraus beträgt die Dauer der Regeneration und Wäsche im allgemeinen mehr als 90 Minuten.

3. Da es wichtig ist, dass man eine gleichmässige Verteilung der Flüssigkeiten beim Durchqueren des Harzbettes erreicht, und zwar sowohl bei der Beladung als auch bei der Regeneration, und dies bei einer Schwankung der Durchsatzmenge von mindestens 10 : 1, sind spezielle Verteilungssysteme erforderlich. Die bestehenden Ionenaustauschkolonnen, die mit klassischen Filterböden ausgerüstet sind, weisen deshalb und notgedrungen schlechte Bedingungen für die gleichförmige Verteilung des Regeneriermediums auf.

4. In der Folge bestehen mangelhafte hydraulische Bedingungen für die Verdrängung und das Auswaschen der Regenerierlösung, was zu erhöhtem inneren Wasserverbrauch führt.

5. Die nutzbare Kapazität (NK) der regenerierten Ionenaustauschharze ist als Folge zu niedriger Regeneriermittelkonzentrationen oftmals zu niedrig.

Das Verfahren der Erfindung ist auf die Beseitigung der obigen Nachteile gerichtet. Dabei wird insbesondere die Dauer der Regenerier- bzw. Verdrängungs- und Waschoperation auf ein Minimum herabgesetzt. Gleichzeitig erfolgt die Regenerierung und Wäsche des beladenen Harzes unter optimalen hydraulischen und kinetischen Bedingungen.

Zur Lösung dieser Aufgabe wird bei dem Verfahren der Erfindung unter Aufhebung des Donnan-Ausschlusses mit hochkonzentrierten Regeneriermitteln im Gegenstrom regeneriert, wobei das Volumen des konzentrierten Regeneriermittels mindestens ¼ des Zwischenkornvolumens des Harzbettes beträgt und der Hin- und Rücktransport des Harzes in kompaktem Zustand und ohne Aufhebung der jeweiligen Beladungszonen und Konzentrationsfronten innerhalb der Harzschüttung erfolgt.

Unter Donnan-Ausschluss wird in der Literatur, z.B. «Ullmanns Encyklopädie der technischen Chemie», 4. Auflg., Bd. 13, Seite 285 (1977), Verlag Chemie, Weinheim, die Erscheinung verstanden, dass bei hoher Konzentration an Fest-Ionen im Ionenaustauscher und geringer Konzentration derselben Ionenart in der Lösung die Aufnahme von Coionen in den Ionenaustauscher sehr gering bleibt. Mit steigender Konzentration der Lösung verliert der Donnan-Ausschluss an Wirksamkeit bzw. er wird schliesslich aufgehoben, wodurch eine Elektrolyt-«Invasion» des Ionenaustauschers ermöglicht wird.

Das Verfahren der Erfindung berücksicht zwei wesentliche Umstände:

1. Erfahrungsgemäss kann eine Vermischung der Harzschüttung im Sinne des Ortswechsels eines Harzkornes in vertikaler Richtung gegenüber der Gesamtschüttung während der Harzaustragung aus einer Kolonne nur vermieden werden, wenn im Abstrom, d.h. in Schwerkraftrichtung vorgegangen wird. Bei einer Aufstromaustragung erfolgt entweder zwangsweise eine hydraulische Verdünnung der festen Harzphase oder aber es muss mit extrem hohen Strömungsgeschwindigkeiten innerhalb der jeweiligen Kolonne von z.B. 100 m/h gearbeitet werden, die zu einer schnellen mechanischen Zerstörung des Harzes in Rohrleitungen und Armaturen führt.

2. Die Regeneration eines Harzfestbettes mit Lösungen relativ hoher Konzentration, d.h. mit einem Bruchteil an Regeneriermittelvolumen bezogen auf das Schüttvolumen des Harzes, gelingt nur im Abstrom oder Doppelstrom, wegen der osmotischen Schrumpfung des Harzes in Gegenwart von Lösungen hoher Elektrolytkonzentration, nicht dagegen im reinen Aufstrom.

Die Kombination aus externer Regenerierung im Gegenstrom in dem diskontinuierlichen Ionenaustauschverfahren mit Harzfestbett der Erfindung führt insoweit nicht zu selbstverständlichen Ergebnissen, dass bei konventionellen Ionenaustauscheranlagen, auch solchen, bei denen im Gegenstrom regeneriert wird, mit wenigstens 1,5 Bettvolumen an Konzentrat und wenigstens 2 Bettvolumen an Nachlauf im Falle eines Kationenaustauschers und wenigstens 4 Bettvolumen an Nachlauf im Falle eines Anionenaustauschers gerechnet werden muss. Demgegenüber gelingt die Rückgewinnung von Wertstoffen, z.B. von Ammoniumnitrat, bei etwa 1,2–1,5 Bettvolumen am Gesamteluat je Regeneration. Dieses Eluatvolumen wird normalerweise in sich fraktioniert in ca. 0,25 Bettvolumen Vorlauf, 0,6 Bettvolumen Konzentrat und ca. 0,45 Bettvolumen Nachlauf, und zwar im Falle der Verwendung eines Kationenaustauschers.

Als hochkonzentrierte Regeneriermittel werden vorzugsweise 45 bis 60%ige $HNO_3$, 25 bis 32%ige HCl, 15 bis 30%ige NaOH oder 10 bis 25%iges $NH_3$ verwendet. Das verwendete Harz wird vorzugsweise in klassiertem Zustand eingesetzt.

Gemäss einer Abänderung des Verfahrens der Erfindung erfolgt die Beladung des Harzes im Doppelstrom, wobei es im divergierenden Doppelstrom beladen und im konvergierenden Doppelstrom regeneriert und gewaschen oder im konvergierenden Doppelstrom beladen und im divergierenden Doppelstrom regeneriert und gewaschen wird.

In diesem Zusammenhang bedeutet «konvergierender Doppelstrom» eine Strömungsrichtung vom Kopf bzw. Boden der Kolonne zur Kolonnenmitte. «Divergierender Doppelstrom» bedeutet eine Strömungsrichtung von der Kolonnenmitte zum Kopf bzw. Boden der Kolonne.

Die vorgenannten Betriebsarten der Beladungskolonne können auch zusammenfassend als «Beladung im Aufstrom und/oder Abstrom» bezeichnet werden.

Gemäss einer bevorzugten Ausführungsform des Verfahrens der Erfindung wird zur Rückspülung ein Teil des beladenen Harzes vom Boden der Beladungskolonne abgenommen und in die Regenerierkolonne eingeführt und das in der Beladungskolonne verbliebene und/oder das in der Regenerierkolonne befindliche Harz getrennt rückgespült.

In Abhängigkeit von der Art des zu behandelnden Mediums, der auszutauschenden Ionen und der Regeneriermittel kann die Rückspülung nach bestimmten Betriebszeiten bzw. Betriebszyklen erforderlich werden, z.B. nach jedem zwanzigsten oder zweihundersten Zyklus. Die vorgenannte getrennte Rückspülung des in der Beladungskolonne verbliebenen und/oder des in der Regenerierkolonne befindlichen Harzes gestattet zwar nur einen groben Beibehalt der Konzentrationszonen und Konzentrationsfronten innerhalb der gesamten Harzschüttung, kann jedoch unter idealem Beibehalt der Harzklassierung nachfolgen.

Gemäss einer weiteren bevorzugten Ausführungsform des Verfahrens der Erfindung kann das beladene Harz am Boden oder am Kopf der Regenerierkolonne und das regenerierte und gewaschene Harz am Boden oder am Kopf der Beladungskolonne eingeführt werden. Somit erfolgt der Harzaustrag aus den beiden Kolonnen stets über die jeweiligen Böden. Dadurch kommt bei Abstromregenerierung jeweils ein Gegenstrom-Regeneriereffekt in dem Sinne zustande, dass der überregenerierte Harzanteil am Regeneriermitteleintritt der Regenerierkolonne identisch ist mit dem Harzanteil, der sich am Austritt des zu behandelnden Mediums der Beladungskolonne befindet und sich mit dem Reinprodukt des Beladungsvorganges zumindest im angenäherten chemischen Gleichgewicht befindet. Die Massnahmen der Regenerierung und Wäsche gemäss der Erfindung erfolgen stets am kompaktierten Bett und im Abstrom, und zwar in einem Anlagenbereich, der vollständig von der Beladungskolonne getrennt ist.

Die Regenerierung wird so eingestellt, dass das Volumen des konzentrierten Regeneriermittels mindestens ¼ des Zwischenvolumens des Harzbettes beträgt bzw. mindestens 0,075 l pro 1 Harzschüttvolumen.

Vorrichtungen zur Durchführung des Verfahrens der Erfindung können eine oder mehrere Beladungskolonnen aufweisen, die so dimensioniert sind, dass die Beladung unter optimalen Bedingungen durchgeführt wird. Weiterhin ist eine getrennte Regenerierkolonne vorgesehen, deren Dimensionierung ebenfalls bezüglich der Regenerier- und Waschbedingungen optimiert ist.

Die Beladungskolonne kann als zylindrische vertikale Kolonne ausgebildet sein, die an den oberen und unteren Teilen glockenartige oder konische Abdeckungen aufweist und unter Einschaltung von Absperrventilen, Klappen, Hähnen oder Schiebern mit der Regenerier- und Waschkolonne über Rohrleitungen verbunden ist.

Die Regenerier- und Waschkolonne kann in Form einer zylindrischen, vertikalen Kolonne ausgebildet sein, deren Höhe mindestens zwei-, vorzugsweise dreimal grösser als deren Durchmesser ist. Sie kann an ihrem oberen Teil ebenfalls mit einer konischen oder glockenartigen bzw.

klöpperbodenartigen Abdeckung und an ihrem unteren Teil mit einem konischen Boden, welcher mit einer Absperrarmatur verbunden ist, ausgestattet sein.

Beide Kolonnen sind mit Rohrleitungen zum Zuführen und Abführen von behandelten Flüssigkeiten, Hilfsflüssigkeiten für den hydraulischen Transport, Flüssigkeiten für die Konditionierung des Harzes (Kühlung, Rückspülung, Klassierung) sowie von Regenerier- und Waschflüssigkeiten versehen. Dabei sind Filtersysteme für die Verteilung und das Sammeln der Flüssigkeiten vorgesehen, weiterhin Mess- und Regeleinrichtungen, Armaturen sowie pneumatische und/oder elektrische Einrichtungen für die Betätigung der Armaturen.

Das Verfahren der Erfindung bietet insbesondere die folgenden Vorteile:

1. Es können Flüssigkeiten bei variablem Durchsatz und mit schwankender Ionenbeladung unter optimalen hydraulischen und kinematischen Bedingungen behandelt werden, wobei die spezifischen Belastungen 5–100 $m^3/h \cdot m^3_H$ betragen können.

2. Die beladenen Harze können unter optimalen hydraulischen und kinetischen Bedingungen im Gegenstrom regeneriert werden, wobei stark konzentrierte Regeneriermittel eingesetzt werden können; die spezifischen Belastungen können 5–25 $m^3/h \cdot m^3_H$ betragen.

3. Es können konzentrierte (5–6 N) Eluate bei der Regeneration erhalten werden, und zwar infolge von stark konzentrierten Regeneriermitteln, der Verwendung einer minimalen Verdrängungs- und Waschwassermenge (1,4–2,4 Bettvolumen), der Verringerung von Verdünnungs- und Mischerscheinungen beim Durchqueren des Harzbettes auf ein Minimum und der Möglichkeit einer scharfen Fraktionierung des Eluates.

4. Regeneration und Wäsche erfordern einen minimalen Zeitaufwand (lediglich 12–30 Minuten) und ermöglichen somit kurze Beladungszyklen (30–60 Minuten).

5. Infolge des Einsatzes von stark konzentrierten Regeneriermitteln, der damit verbesserten Reaktionskinetik (Aufhebung des Donnan-Ausschlusses) sowie der günstigeren Gleichgewichtslage können höhere nutzbare Harzkapazitäten erzielt werden.

Weitere bevorzugte Ausführungsformen und Vorteile des Verfahrens der Erfindung ergeben sich aus den Ansprüchen und der folgenden Beschreibung, wobei auf die Zeichnungen Bezug genommen wird. Es zeigen:

Fig. 1 ein Fliessbild einer Vorrichtung zur Durchführung des Verfahrens der Erfindung mit Beladung und Regenerierung im Abstrom;

Fig. 2 ein Fliessbild einer Vorrichtung zur Durchführung des Verfahrens der Erfindung mit Beladung und Regenerierung im Doppelstrom;

Fig. 3 ein Fliessbild der in Fig. 2 gezeigten Vorrichtung, jedoch mit gegenüber der Fig. 2 umgekehrter Strömungsrichtung bei Beladung und Regenerierung;

Fig. 4 ein Fliessbild einer anderen Ausführungsform der Vorrichtung gemäss Fig. 1 mit Beladung im Aufstrom;

Fig. 5 ein Fliessbild einer anderen Ausführungsform der Vorrichtung gemäss Fig. 4 mit einer weiteren Beladungskolonne.

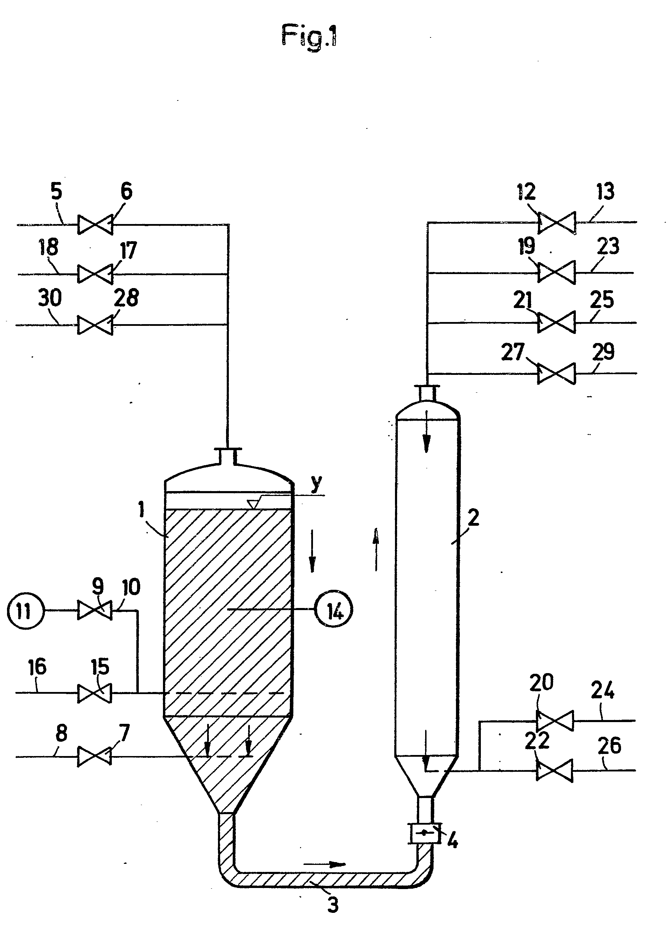

Die in Fig. 1 gezeigte Vorrichtung weist zwei vertikale Kolonnen 1, 2 auf, die miteinander über eine Leitung 3 und eine Absperrarmatur, z.B. vom Typ einer Absperrklappe 4, verbunden sind. Die Kolonne 1 dient zur Beladung und gegebenenfalls zur Rückspülung, die Kolonne 2 dient zur Regenerierung und Nachwäsche des Harzes. Das Harz wird auf hydraulischem Wege von der einen Kolonne in die andere befördert, und zwar durch Druckwasser bei geringstmöglicher hydraulischer Verdünnung.

Die Beladungskolonne 1 ist in Form eines vertikalen Zylinders ausgebildet, der an seinem oberen Teil z.B. mit einem Klöpperboden und an seinem unteren Teil mit einem konischen Boden ausgerüstet ist. Die Regenerierkolonne ist entsprechend ausgebildet.

Zu Beginn des Verfahrens während des Beladungsspieles füllt das Harz lediglich die Beladungskolonne und die Verbindungsleitung 3.

Das zu behandelnde Medium tritt durch eine Leitung 5 und ein Ventil 6 am oberen Teil der Beladungskolonne ein und wird gleichmässig über den gesamten Kolonnenquerschnitt mit Hilfe von Deflektoren oder einem nicht gezeigten Verteilungsrohr oder mehreren verteilt. Das Medium durchquert das Harzbett von oben nach unten, und das behandelte Medium wird am unteren konischen Teil der Kolonne mittels eines nicht gezeigten Sammelrohrs oder mehrerer, die mit Filterelementen ausgestattet sind, über ein Ventil 7 und eine Leitung 8 weggeführt.

Um die Beladung des Harzes bzw. das Fortschreiten der Beladungsfront zu bestimmen, entnimmt man kontinuierlich am unteren Teil der Kolonne eine Probe des behandelten Mediums, und zwar über eine nicht gezeigte Leitung oder mehrere, die mit Filterelementen ausgestattet ist; hierzu dient ein Ventil 9 und eine Leitung 10. Ein daran angeschlossener Analysator 11 misst die physikalischen und/oder chemischen Eigenschaften der entnommenen Flüssigkeit und stellt sie in Beziehung zu einem zuvor eingestellten, gegebenenfalls optimierten Wert.

Als Analysator 11 können pH-Meter, Leitfähigkeitsmesser, eine ionensensitive Elektrode, gegebenenfalls auch im Sinne von Messdifferenzmessungen oder dergleichen verwendet werden.

Wenn die Analysenwerte der Probe, die anfangs dem Ionengleichgewichtsschlupf im zu behandelnden Medium entsprechen, einen vorbestimmten Wert übersteigen, veranlasst der Analysator 11 das Schliessen des Ventils 7 sowie das Öffnen der Absperrarmatur 4 und eines Ventils 20, das zu einer Leitung 24 für die Abführung von in der Regenerierkolonne 2 befindlicher Flüssigkeit gehört.

Infolge des zwischen den miteinander verbundenen Kolonnen gebildeten Druckunterschiedes wird das erschöpfte Harz in die Regenerierkolonne transportiert. Bei der Erläuterung des Verfahrens wird im folgenden davon ausgegangen, dass vor der Regeneration eine Rückspülung der oberen Schüttungshälfte des Harzes erfolgen soll.

Sobald die Grenzfläche Flüssigkeit/Harz (y) beim Absinken einen Niveaudetecktor 14 erreicht, veranlasst dieser das Schliessen der Ventile 6 und 12 sowie das Öffnen eines Ventils 15, das sich in einer Leitung 16 befindet.

Gleichzeitig setzt der Niveaudetektor eine Automatikeinrichtung in Gang, die auf die Ventile 4, 6, 7, 12, 15, 17, 19, 20, 21 und 22 wirkt, und zwar entsprechend einem vorbestimmten zeitabhängigen Programm, so dass die Massnahmen der Rückspülung, des weiteren Transports, und zwar des rückgespülten Harzes von der Beladungskolonne zu der Regenerierkolonne, der Regeneration und Wäsche und des erneuten Transports des regenerierten Harzes in die Beladungskolonne zurück, unter optimalen Bedingungen stattfinden.

Das anfänglich in der Beladungskolonne verbliebene Harz wird mittels Wasser angehoben, das über das Ventil 15 und die Leitung 16 einströmt. Die Flüssigkeit durchquert das Harzbett von unten nach oben und bewirkt dabei eine Expansion des Harzes in der Grössenordnung von 50–100%. Das Rückspülwasser tritt zusammen mit feinen Harzteilchen und gegebenenfalls Verunreinigungen über das Ventil 17 und die Leitung 18 aus.

Am Ende der Rückspülung veranlasst die Programmsteuerung das Schliessen der Ventile 15 und 17 und das Öffnen der Ventile 6 und 12. Das in der Beladungskolonne 1 befindliche und nunmehr rückgespülte Harz wird nun ebenfalls in die Regenerierkolonne überführt.

Die Programmsteuerung veranlasst nun das Schliessen der Ventile 6 und 12 sowie das Öffnen des Ventils 19. Das konzentrierte Regeneriermittel tritt über die Leitung 23 am oberen Teil der Regenerierkolonne 2 ein, wird mit Hilfe nicht gezeigter Verteileinrichtungen gleichmässig verteilt und durchquert das Harzbett von oben nach unten. Das abströmende Medium wird am unteren Teil mittels eines nicht gezeigten Sammelrohres oder mehrerer, das mit Filterelementen ausgestattet ist, über das Ventil 20 und eine Leitung 24 entfernt.

Anschliessend wird über eine Leitung 25 und das Ventil 21 Waschflüssigkeit, z.B. Waschwasser, eingegeben. Die Produkte der Regeneration werden über ein Ventil 22 und eine Leitung 26 verdrängt und ausgewaschen.

Am Ende des Regenerations-/Waschschrittes veranlasst die Programmsteuerung den hydraulischen Transport des regenerierten Harzes in die Beladungskolonne. Zunächst werden die Ventile 21 und 22 geschlossen und die Ventile 4, 27 und 28 geöffnet. Das Transportmedium gelangt über eine Leitung 29 an den oberen Teil der Regenerierkolonne und schiebt das Harzbett von oben nach unten aus Kolonne 2 und von unten nach oben in die Kolonne 1. Die Transportflüssigkeit wird über das Ventil 15 und eine Leitung 16 abgeführt.

Am Ende des Transportschrittes veranlasst die Programmsteuerung die Schliessung der Ventile 4, 27 und 28 sowie das Öffnen der Ventile 6 und 7, womit ein neuer Beladungszyklus beginnen kann.

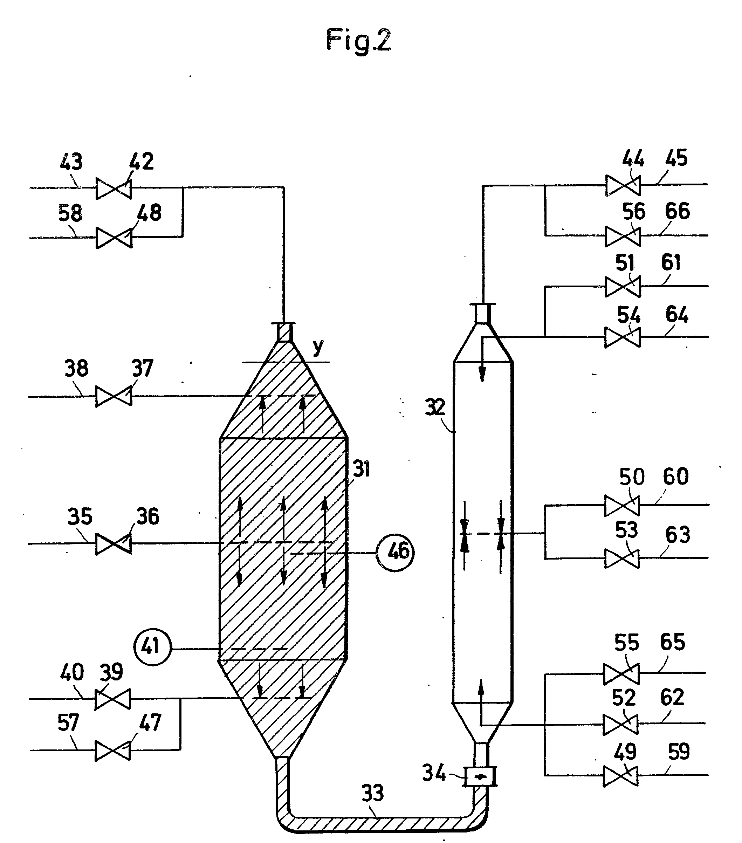

Die Ausführungsform gemäss Fig. 2 betrifft die Konstruktion und die Wirkungsweise einer Vorrichtung der Erfindung im Doppelstrom gemäss der Erfindung.

Die Vorrichtung gemäss Fig. 2 weist zwei vertikale Kolonnen 31, 32 auf, die über eine Leitung 33 mit einem Absperrventil 34 verbunden sind.

Die Beladungskolonne und die Regenerierkolonne sind in Form eines vertikalen Zylinders ausgebildet, der an seinem oberen und unteren Ende mit einer konischen Abdeckung versehen ist.

Zu Beginn des Verfahrens füllt das Harz die Beladungskolonne 31 und die Verbindungsleitung 33.

Das zu behandelnde Medium wird über eine Leitung 35 und ein Ventil 36 am Mittelteil der Beladungskolonne eingeführt, in zwei Hälften aufgeteilt und gleichmässig über den gesamten Querschnitt der Kolonne mit Hilfe einer nicht gezeigten Verteilungsleitung oder mehrerer verteilt. Die beiden Flüssigkeitsströme durchqueren das Harzbett von unten nach oben bzw. von oben nach unten. Das behandelte abströmende Medium wird am oberen konischen Teil mittels einer nicht gezeigten Sammelleitung, die mit Filterelementen ausgestattet ist, oder mehrerer, sowie mittels eines Ventils 37 und einer Leitung 38 abgeführt. Am unteren konischen Teil dient ein nicht gezeigtes, entsprechend ausgerüstetes Sammelrohr oder mehrere, ein Ventil 39 und eine Leitung 40 für den gleichen Zweck.

Ein Analysator 41 meldet, wenn die beiden Teilmengen des Harzes erschöpft sind.

Wenn die physikalisch-chemischen Eigenschaften einer bei Durchbruch der Beladungszone entnommenen Flüssigkeitsprobe eine festgelegte Messgrösse übersteigen, veranlasst der Analysator 41 das Schliessen der Ventile 36, 37 und 39, die Öffnung der Absperrklappe 34 und eines Ventils 42, das sich in einer Leitung 43 für die Einführung von Transportflüssigkeit befindet, sowie die Öffnung eines Ventils 44, das in einer Leitung 45 für das Wegführen von in der Regenerierkolonne vorhandener Flüssigkeit angeordnet ist.

Bei der folgenden Beschreibung des Verfahrens wird davon ausgegangen, dass vor der Regenerierung eine Rückspülung des gesamten Harzes erfolgen soll.

Infolge des zwischen den zwei miteinander verbundenen Kolonnen herrschenden Druckunterschieds wird die Hälfte des beladenen Harzes in die Regenerierkolonne 32 überführt. Sobald die Grenzfläche Flüssigkeit/Harz (y) einen Niveaudetektor 46 erreicht, veranlasst dieser das Schliessen der Ventile 34 und 42. Weiterhin setzt er eine Automatik in Gang, die auf die Ventile 34, 36, 37, 39, 42, 44, 47, 48, 49, 50, 51, 52, 53, 54, 55 und 56 einwirkt, und zwar entsprechend eines zeitabhängigen festgelegten Programms, gemäss dem die Massnahmen der Rückspülung, des Transports der Harzanteile von der Beladungskolonne in die Regenerierkolonne, der Regeneration und der Wäsche des beladenen Harzes und des Rücktransports des regenerierten Harzes in die Beladungskolonne unter optimalen Bedingungen stattfinden.

Das in der Beladungskolonne 31 verbliebene Harz wird mittels Wassers expandiert, das über eine Leitung 57 und das Ventil 47 einströmt. Die Flüssigkeit durchquert das Harzbett von unten nach oben und bewirkt eine Expansion in der Grössenordnung von 60%. Sie wird zusammen mit feinen Harzteilchen und gegebenenfalls Verunreinigungen über eine Leitung 58 und das Ventil 48 entfernt.

Das in die Regenerierkolonne überführte Harz wird gleichzeitig mittels Wasser, das über die Leitung 59 und das Ventil 49 eingeführt wird, expandiert. Die Flüssigkeit durchquert das Harzbett von unten nach oben und wird zusammen mit feinen Harzteilchen über die Leitung 45 und das Ventil 44 abgeführt.

Am Ende der Rückspülung veranlasst die Programmsteuerung das Schliessen der Ventile 47, 48 und 49 und das Öffnen der Ventile 42 und 34, so dass das gesamte, in der Beladungskolonne befindliche Harz in die Regenerierkolonne überführt werden kann.

Anschliessend veranlasst die Programmsteuerung die Schliessung der Ventile 42, 34 und 44 und das Öffnen der Ventile 50, 51 und 52. Das konzentrierte Regeneriermittel tritt über die Leitungen 61 und 62 an den beiden Enden der Regenerierkolonne 32 ein, wird mit Hilfe einer oder mehrerer, nicht gezeigter Verteileinrichtungen gleichförmig verteilt und durchquert das Harzbett von oben nach unten bzw. von unten nach oben. Die konvergierenden Flüssigkeiten werden mit Hilfe von nicht gezeigten Sammelrohren, die mit Filterelementen versehen sind, über die Leitungen 50 bzw. Ventil 60 am mittleren Teil der Kolonne abgeführt.

Das Waschwasser wird über die Leitungen 64 und 65 und die Ventile 54 und 55 an den beiden Enden der Regenerierkolonne eingeführt. Die Regenerierprodukte werden über Leitung 63 und Ventil 53 abgeführt.

Am Ende des Regenerierschrittes wird das regenerierte und gewaschene Harz hydraulisch in die Beladungskolonne zurücktransportiert. Hierzu veranlasst die Programmsteuerung das Schliessen der Ventile 53, 54 und 55 und das Öffnen der Armaturen 56, 34 und 48. Die Transportflüssigkeit kommt über die Leitung 66 zum oberen Teil der Regenerierkolonne und schiebt das Harzbett von oben nach unten. Die Transportflüssigkeit wird über die Leitung 58 und das Ventil 48 abgeführt.

Am Ende des Harztransports veranlasst die Programmsteuerung das Schliessen der Armaturen 56, 34 und 48 und das Öffnen der Ventile 36, 37 und 39, wonach ein neuer Beladungstakt beginnen kann.

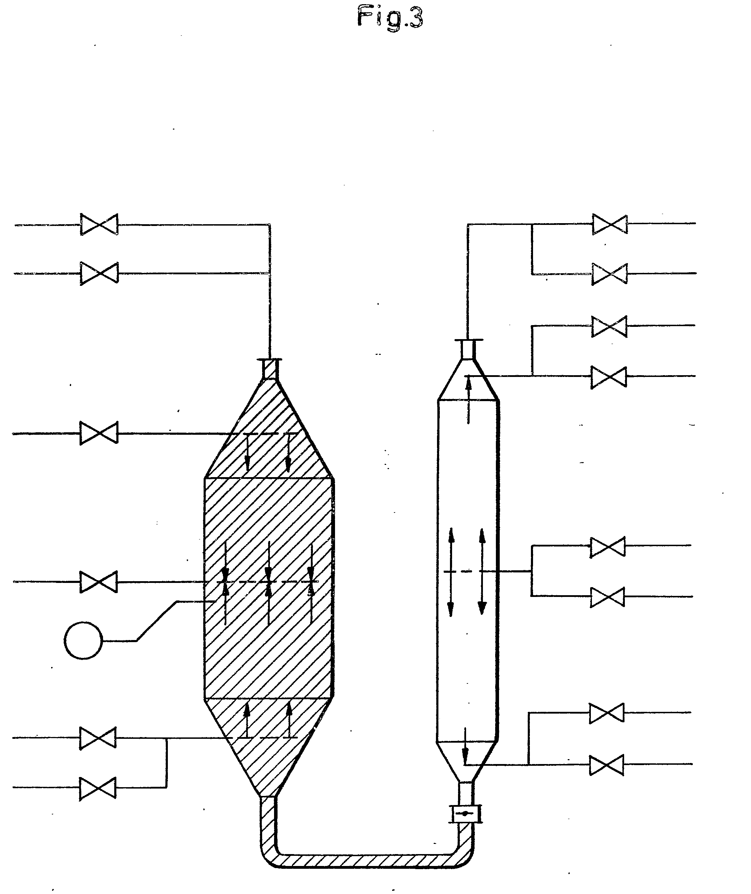

Aus dem in Fig. 3 gezeigten Fliessbild ist die gleiche Vorrichtung wie in Fig. 2 ersichtlich. Auf eine Beschreibung der Vorrichtungsteile wird daher verzichtet. Lediglich die Strömungsrichtungen bei Beladung bzw. Regeneration und Wäsche sind gegenüber der Fig. 2 umgekehrt, d.h. die Beladung des Harzes erfolgt im konvergierenden Doppelstrom und das beladene Harz wird im divergierenden Doppelstrom regeneriert und gewaschen.

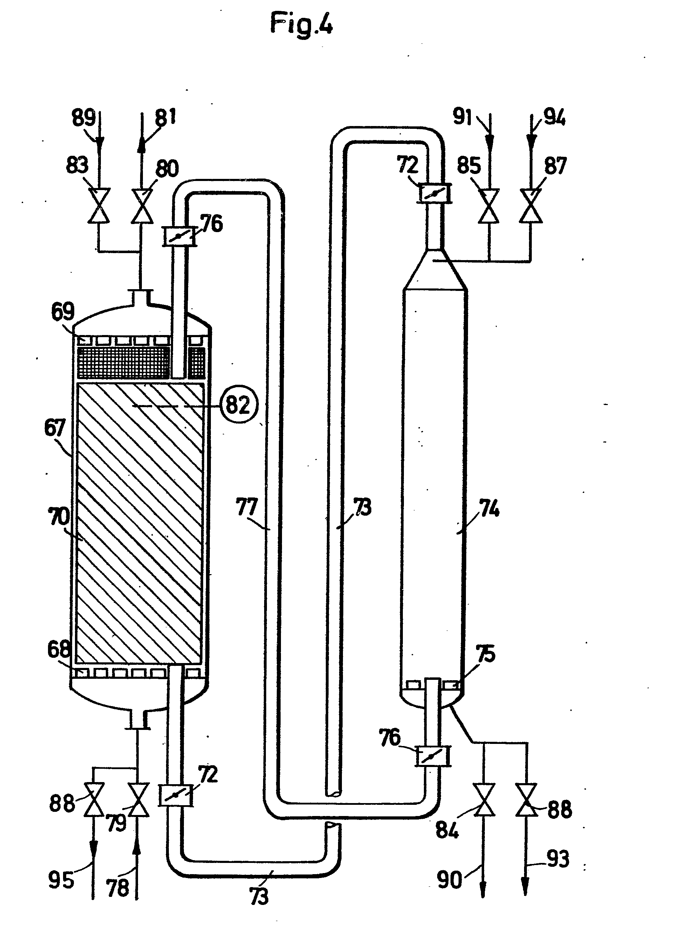

Die aus Fig. 4 ersichtliche Vorrichtung umfasst eine Beladungskolonne 67 mit Düsenboden 68 und 69, zwischen denen sich das Harz 70 befindet. Die Beladungskolonne ist an ihrem unteren Teil mit einer Leitung bzw. mehreren für den Abtransport des Harzes versehen; diese Leitung bildet mit den Absperrklappen 72 und einer Transportleitung 73 eine Verbindung mit dem oberen Teil einer Regenerierkolonne 74.

Die Kolonne 74 für die Regeneration und Wäsche ist an ihrem unteren Teil mit einer Filterplatte 75 versehen, weiterhin mit einer Leitung für den Abtransport des harzes über die Absperrklappen 76 und eine Transportleitung 77 zu dem oberen Teil der Beladungskolonne 67.

Die zu behandelnde Flüssigkeit tritt über die Leitung 78 und ein Ventil 79 in den unteren Teil der Beladungskolonne 67 ein, wird mittels des Düsenbodens 68 gleichförmig über den gesamten Kolonnenquerschnitt verteilt und durchquert das Harzbett 70 von unten nach oben. Die behandelte Flüssigkeit wird am oberen Teil nach Durchqueren des Düsenbodens 69 über ein Ventil 80 und eine Leitung 81 weggeführt.

Die Erschöpfung des Harzes wird mit einem Analysator 82 bestimmt. Wenn der Ionenschlupf einen festgelegten Wert übersteigt, veranlasst der Analysator 82 die Schliessung der Ventile 79 und 80 und setzt eine Programmsteuerung in Gang, die auf die Klappe 72 und 76 sowie auf Ventile 83, 84, 85, 87, 88 und 89 wirkt, und zwar nach einem vorgegebenen Zeitablauf, so dass die Massnahmen des Transports des erschöpften Harzes in die Regenerierkolonne 74, der Regeneration, der Wäsche und des Transports des regenerierten Harzes zurück in die Beladungskolonne unter optimalen Bedingungen und innerhalb von insgesamt maximal 50 Minuten erfolgen können.

Für den Transport des erschöpften Harzes zu der Regenerierkolonne wird die behandelte Flüssigkeit über die Leitung 89 und das Ventil 83 eingeleitet und schiebt das erschöpfte Harz von oben nach unten durch die Absperrklappen 72 und die Transportleitung 73 in die Regenerierkolonne 74. Die Transportflüssigkeit wird über die Filterplatte 75 sowie über ein Ventil 84 und eine Leitung 90 abgeführt.

Wenn der Transport beendet ist, werden die Klappen 72 geschlossen. Die Regenerierflüssigkeit wird über eine Leitung 91 und das Ventil 85 am oberen Teil der Kolonne eingeführt. Die Waschflüssigkeit wird über eine Leitung 94 und das Ventil 87 eingeleitet. Das abströmende Medium wird über die Filterplatte 75 und das Ventil 88 sowie die Leitung 93 abgeführt. Das regenerierte und gewaschene Harz wird von neuem auf hydraulischem Wege in die Beladungskolonne transportiert. Die Transportflüssigkeit wird über eine Leitung 94 und das Ventil 87 eingegeben. Das Harz wird von oben nach unten durch die Absperrklappen 76 und die Leitung 77 geschoben und von oben in die Bela-

dungskolonne eingegeben. Die Transportflüssigkeit wird über das Ventil 88 und eine Leitung 95 am unteren Teil der Beladungskolonne abgeführt.

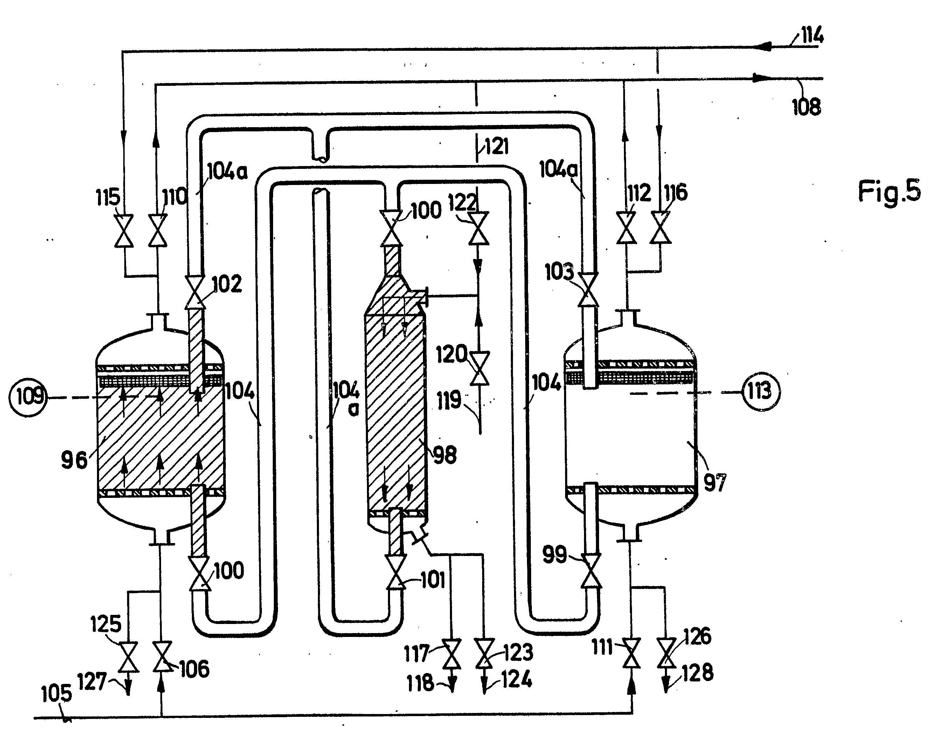

Figur 5 zeigt das Fliessbild einer Vorrichtung der Erfindung mit zwei Beladungskolonnen 96 und 97 und eine Kolonne für Regeneration und Wäsche 98. Weiterhin vorgesehen sind Absperrventile 99, 100, 101, 102 und 103 sowie Transportleitungen 104 und 104a für das Harz.

Die zu behandelnde Flüssigkeit, z.B. mit einem Gehalt von 3 g/l $HNO_3$, tritt über eine Leitung 105 und ein Ventil 106 am Boden der Beladungskolonne 96 ein und durchquert das Harzbett, z.B. mit einer Geschwindigkeit von 40–50 m/h von unten nach oben. Die behandelte Flüssigkeit wird über ein Ventil 110 und eine Leitung 108 weggeführt und weist z.B. einen Gehalt von 1–3 mg/l $HNO_3$ auf.

Das Harz kann z.B. ein stark basisches, anionisches, makroporöses Harz auf der Basis von Polystyrol sein.

Wenn das Harz erschöpft ist, veranlasst ein pH-Meter 109 die Schliessung der Ventile 106 und 110 sowie die Öffnung der Ventile 111 und 112. Die zu behandelnde Flüssigkeit wird nun in die Beladungskolonne 97 geleitet, wobei der Ionenschlupf ($NO_3$) durch ein pH-Meter 113 überwacht wird. Während der Behandlung der Flüssigkeit in der Beladungskolonne 97 wird das in der Beladungskolonne 96 befindliche, erschöpfte Harz zur Regeneration und Wäsche in die Regenerierkolonne 98 überführt.

Der Transport in die Regenerierkolonne, die Regeneration, die Wäsche und der Rücktransport in die Beladungskolonnen werden durch Programmsteuerungen vorgenommen, die durch pH-Meter 109 und 113 in Gang gesetzt werden.

Die Flüssigkeit für den Transport des erschöpften Harzes in die Regenerierkolonne 98, z.B. behandelte Flüssigkeit mit einem Gehalt von 1–3 mg/l $HNO_3$, wird über eine Leitung 114 und die Ventile 115 bzw. 116 eingeführt und über ein Ventil 117 und eine Leitung 118 aus der Regenerierkolonne entfernt. Der Harztransport erfolgt über die Armaturen 99, 100 und über die Leitung 104. Die Regeneration des beladenen, in der Nitrat-Form befindlichen Harzes erfolgt z.B. mit einer 30%igen NaOH-Lösung, und zwar in einer Menge von z.B. 40 g NaOH/l Harz und bei einer Durchsatzleistung von z.B. 20 Bettvolumen/h.

Die 30%ige NaOH-Lösung wird über eine Leitung 119 und ein Ventil 120 eingegeben, bei obigem Beispiel innerhalb von drei Minuten. Die Verdrängung der NaOH-Lösung aus dem Harzbett und das Waschen des regenerierten Harzes erfolgt mit behandelter Flüssigkeit, die über eine Leitung 121 und ein Ventil 122 eingeführt wird, und zwar in einer Menge von z.B. 6 Bettvolumen und bei einer Durchsatzleistung von wiederum 20 Bettvolumen/h. Die Dauer der Wäsche beträgt so nur 18 Minuten und die Gesamtdauer von Regeneration und Wäsche nur 21 Minuten. Die Regenerier- und Waschflüssigkeiten werden über ein Ventil 123 und eine Leitung 124 entfernt.

Der Rücktransport des regenerierten Harzes in die Beladungskolonnen 96 und 97 erfolgt z.B. innerhalb von 7 Minuten mit behandelter Flüssigkeit, und zwar in einer Menge von 1,5 Bettvolumen. Das Transportwasser, das über die Leitung 121 und das Ventil 122 eintritt, schiebt das Harz von oben nach unten, wobei das Harz durch das Absperrventil 101 und die Leitung 104a zu dem oberen Teil der Beladungskolonne 96 (oder 97) über Ventil 102 (oder 103) transportiert wird. Die Transportflüssigkeit wird über ein Ventil 125 oder 126 und eine Leitung 127 (oder 128) entfernt.

Für Hin- und Rücktransport des Harzes sowie Regeneration und Nachwäsche werden bei diesem Beispiel insgesamt je Beladungskolonne nur 35 Minuten benötigt, so dass die einzelne Beladungskolonne selber für nur 35 Minuten Taktzeit dimensioniert zu werden braucht.

## Patentansprüche

1. Verfahren zum diskontinuierlichen Ionenaustausch in Flüssigkeiten an einem Harzfestbett, wobei das Harz im Kurztakt in einer Beladungskolonne (1, 31, 67, 96, 97) im Abstrom oder Aufstrom beladen, nach Beladung am Boden der Beladungskolonne abgenommen und in eine Regenerierkolonne (2, 32, 74, 98) zur externen Regenerierung im Abstrom eingeführt und in üblicher Weise gewaschen wird, wonach das regenerierte, gewaschene und gegebenenfalls rückgespülte Harz am Boden der Regenerierkolonne abgenommen und in die Beladungskolonne zurücktransportiert wird, dadurch gekennzeichnet, dass unter Aufhebung des Donnan-Ausschlusses mit hochkonzentrierten Regeneriermitteln im Gegenstrom regeneriert wird, wobei das Volumen des konzentrierten Regeneriermittels mindestens ¼ des Zwischenkornvolumens des Harzbettes beträgt und der Hin- und Rücktransport des Harzes in kompaktem Zustand und ohne Aufhebung der jeweiligen Beladungszonen und Konzentrationsfronten innerhalb der Harzschüttung erfolgt.

2. Verfahren nach Anspruch 1, dadurch gekennzeichnet, dass als hochkonzentrierte Regeneriermittel 45–60%ige $HNO_3$, 25–32%ige HCl, 15–30%ige NaOH oder 10–25%iges $NH_3$ verwendet werden.

3. Verfahren nach Anspruch 1 oder 2, dadurch gekennzeichnet, dass das verwendete Harz in klassiertem Zustand verwendet wird.

4. Verfahren nach Ansprüchen 1–3, dadurch gekennzeichnet, dass die Beladung des Harzes im Doppelstrom erfolgt.

5. Verfahren nach Anspruch 4, dadurch gekennzeichnet, dass das Harz im divergierenden Doppelstrom beladen und im konvergierenden Doppelstrom regeneriert und gewaschen wird.

6. Verfahren nach Anspruch 4, dadurch gekennzeichnet, dass das Harz im konvergierenden Doppelstrom beladen und im divergierenden Doppelstrom regeneriert und gewaschen wird.

7. Verfahren nach einem der Ansprüche 1–6, dadurch gekennzeichnet, dass zur Rückspülung ein Teil des beladenen Harzes vom Boden der Beladungskolonne (1, 31, 67, 96, 97) abgenommen und in die Regenerierkolonne (2, 32, 74, 98) eingeführt und das in der Beladungskolonne verbliebene und/oder das in der Regenerierkolonne befindliche Harz getrennt rückgespült werden.

8. Verfahren nach einem der Ansprüche 1–7, dadurch gekennzeichnet, dass das beladene Harz am Boden oder am Kopf der Regenerierkolonne (2, 32, 74, 98) eingeführt wird.

9. Verfahren nach einem der Ansprüche 1–8, dadurch gekennzeichnet, dass das regenerierte und gewaschene Harz am Boden oder am Kopf der Beladungskolonne (1, 31, 67, 96, 97) eingeführt wird.

## Claims

1. Process for discontinuous ion exchange in liquids on a fixed resin bed, wherein the resin is charged in a short cycle in a charging column (1, 31, 67, 96, 97) in downward flow or in upward flow, after charging is removed at the bottom of the charging column and is introduced into a regenerating column (2, 32, 74, 98) for external regeneration in downward flow and is washed in usual manner, after which the regenerated, washed and optionally back-flushed resin is removed at the bottom of the regenerating column and is transferred back into the charging column, characterised in that regeneration takes place with elimination of the Donnan exclusion effect using highly concentrated regeneration media in counter flow, wherein the volume of the concentrated regeneration medium amounts to at least ¼ of the interstitial volume of the resin bed and the forward and return transfer of the resin takes place in a compact condition and without disturbing of the respective charging zones and concentration fronts within the resin charge.

2. Process according to Claim 1, characterised in that, as highly concentrated regenerating media, 45–60% solution of $HNO_3$, 25–32% solution of HCl, 15–30% solution of NaOH or 10–25% solution of $NH_3$ are used.

3. Process according to Claim 1 or 2, characterised in that the resin used is used in classified condition.

4. Process according to Claims 1 to 3, characterised in that the charging of the resin is effected in double flow.

5. Process according to Claim 4, characterised in that the resin is charged in divergent double flow and is regenerated and washed in convergent double flow.

6. Process according to Claim 4, characterised in that the resin is charged in convergent double flow and is regenerated and washed in divergent double flow.

7. Process according to Claims 1 to 6, characterised in that, for back-flushing, part of the charged resin is removed from the bottom of the charging column (1, 31, 67, 96, 97) and is introduced into the regenerating column (2, 32, 74, 98) and the resin remaining in the charging column and/or the resin situated in the regenerating column are separately back-flushed.

8. Process according to one of Claims 1 to 7, characterised in that the charged resin is introduced at the bottom or at the top of the regenerating column (2, 32, 74, 98).

9. Process according to one of Claims 1 to 8, characterised in that the regenerated and washed resin is introduced at the bottom or at the top of the charging column (1, 31, 67, 96, 97).

## Revendications

1. Procédé pour l'échange d'ions discontinu dans des liquides sur un lit fixe de résine, dans lequel la résine est chargée par courtes périodes dans une colonne de chargement (1, 31, 67, 96, 97) en courant descendant ou en courant ascendant, évacuée après chargement au pied de la colonne de chargement et envoyée dans une colonne de régénération (2, 32, 74, 98) pour régénération externe en courant descendant et lavée de la manière habituelle, après quoi la résine régénérée, lavée et éventuellement rincée en retour est évacuée au pied de la colonne de régénération et retournée dans la colonne de chargement, caractérisé en ce qu'on régénère à contre-courant avec des agents régénérants à haute concentration en évitant l'exclusion Donnan, le volume de l'agent régénérant concentré représentant au moins ¼ du volume entre les grains ou lit de résine et le transport dans les deux sens de la résine étant effectué à l'état compact et sans dérangement des zones de chargement et fronts de concentration respectifs à l'intérieur du garnissage de résine.

2. Procédé selon la revendication 1, caractérisé en ce que l'on utilise en tant qu'agent régénérant à haute concentration $HNO_3$ à 45–60%, HCl à 25–32%, NaOH à 15–30% ou $NH_3$ à 10–25%.

3. Procédé selon la revendication 1 ou 2, caractérisé en ce que l'on utilise la résine à l'état de classification granulométrique.

4. Procédé selon les revendications 1 à 3, caractérisé en ce que le chargement de la résine est effectué en double courant.

5. Procédé selon la revendication 4, caractérisé en ce que la résine est chargée en double courant divergent et régénérée et lavée en double courant convergent.

6. Procédé selon la revendication 4, caractérisé en ce que la résine est chargée en double courant convergent et régénérée et lavée en double courant divergent.

7. Procédé selon l'une des revendications 1 à 6, caractérisé en ce que, pour le rinçage en retour, on évacue une partie de la résine chargée du pied de la colonne de chargement (1, 31, 67, 96, 97) et on l'envoie dans la colonne de régénération (2, 32, 74, 98) et on soumet la résine restant dans la colonne de chargement et/ou la résine qui se trouve dans la colonne de régénération à rinçage en retour séparé.

8. Procédé selon l'une des revendications 1 à 7, caractérisé en ce que la résine chargée est envoyée au pied ou en tête de la colonne de régénération (2, 32, 74, 98).

9. Procédé selon l'une des revendications 1 à 8, caractérisé en ce que la résine régénérée et lavée est envoyée au pied ou en tête de la colonne de chargement (1, 31, 67, 96, 97).

# Fig.1

# Fig.2

# Fig.3

Fig.4

Fig.5